# EUROPEAN PATENT APPLICATION

(11) **EP 3 505 731 A1**
(43) Date of publication of application: **03.07.2019**
(21) Application number: 17210983.7
(22) Date of filing: 28.12.2017
(51) Int. Cl.: F01N 3/20, C01B 3/04, C01C 1/08

(54) **METHOD OF PARTIALLY CONVERTING A SOLUTION COMPRISING AN AMMONIA PRECURSOR**

(71) Applicant: Plastic Omnium Advanced Innovation and Research, 1120 Bruxelles (BE)
(72) Inventor: DOUGNIER, François, 3191 HEVER (BE); MONGE-BONINI, Beatriz, 1040 BRUXELLES (BE); DE MAN, Pierre, 1090 BRUXELLES (BE); SCHWEICHER, Julien, 1040 ETTERBEEK (BE); VAN SCHAFTINGEN, Jules-Joseph, 1300 WAVRE (BE)
(74) Representative: LLR

(57) **Abstract**

In the method of converting a solution (10) comprising an ammonia precursor, automated means (6) stop a partial conversion of the ammonia precursor of the solution (10) into ammonia when a predetermined conversion level is reached.

## Description

The invention deals with the use of a urea solution in vehicles.

In particular, it deals with the conversion of an ammonia precursor to produce ammonia to be used in a vehicle.

It is known to use ammonia as a reductant in a selective catalytic reduction to convert nitrogen oxides of the exhaust gas into diatomic nitrogen and water and thus to diminish the emission of nitrogen oxides into atmosphere.

Furthermore, as the storage of ammonia in a vehicle has to be avoided since it may be dangerous for people and materials, it is known to store a solution of ammonia precursor, typically a solution of urea, and to convert it into ammonia by hydrolysis when it is needed for the reduction.

However, it has several drawbacks. Indeed, the total conversion of the ammonia precursor into ammonia is time consuming, increases the start-up time of the system before the reduction reaction is possible and could cause a premature wear of the system because of high pressure and temperature needed for the conversion during such a long time. Furthermore, the solution of urea is known to freeze below - 11°C and is then unusable without a prior step of heating when this temperature is reached. Eventually, when the solution is injected to an exhaust pipe at a temperature below 180°C, it may create solid deposits which obstruct the exhaust pipe, such that it is necessary, here too, to increase the temperature of the exhaust gas to avoid it, which is power and time consuming. To sum up, the conversion of ammonia precursor is time consuming, resources consuming and decreases the lifetime of the system by wearing it.

The invention aims to overcome these drawbacks.

To this end, the invention provides a method of converting a solution comprising an ammonia precursor, wherein automated means stop a partial conversion of the ammonia precursor of the solution into ammonia when a predetermined conversion level of the conversion is reached.

Indeed, for example with urea, it has been surprisingly observed by the inventors that, compared to a urea solution, a partially converted solution has a similar efficiency concerning the reduction of nitrogen oxides, while creating less solid deposits when injected at low temperature, and having a lower melting point, allowing the use of this partially converted solution at worse conditions of temperature than a urea solution. Corollary, the use of such a solution limits the time needed to convert the solution, as it is a partial conversion, and limits the time spent to heat the exhaust gas or the solution itself, thus increasing the lifetime of the system by limiting the wear of this system.

Preferably, the conversion level of the ammonia precursor is predetermined at least with reference to a predetermined temperature of conversion and to a predetermined duration of conversion.

Thus, thanks to testing and collecting results of tests, it may be known at which conditions a predetermined level of conversion is reached. The conversion may for example be allowed by a specific temperature of heating of the solution. In other terms, it is possible to reach a given level of conversion by controlling the associated temperature and duration of heating. When such a temperature of conversion is reached and measured by a sensor, a timer may be started to indicate when the conversion may be stopped to reach a predetermined level of conversion, according to prior tests. In this way, the heating is shorter than a heating to totally convert the solution, such that any premature wear of the system is avoided and the start-up time is shorter.

Advantageously, the predetermined temperature is between 150 and 400°C, preferably between 180 and 250 °C.

Indeed, it has been observed by the inventors that the conversion operates in these ranges. Specifically, it has been determined that, under a temperature of conversion situated between 150 and 250°C, a conversion of 90% of the ammonia precursor allows to reduce the duration of conversion by 50 % versus a conversion of 99%.

Preferably, the conversion level is predetermined at least with reference to a predetermined amount of enzyme to be added to the solution for the partial conversion.

Thus, it is possible to carry out the conversion by enzymatic hydrolysis, in particular to accelerate the conversion. It may thus be a supplementary factor to be taken into account to determine the conversion level to be reached and thus to determine when to stop the heating.

Advantageously, the automated means stop an addition of enzyme to the solution when the predetermined amount of enzyme has been added to the solution.

Indeed, it has been observed by the inventors that the level of conversion reached is directly connected to the amount of enzyme added to the solution. Once the temperature and duration are fixed, it may be the only factor to control. Thus, by testing and collecting results of testing, it is possible to reach a given level of conversion by adding the associated amount of enzyme to the solution.

Preferably, in the case of the addition of enzyme into the solution, the predetermined temperature is between 30 and 60°C.

Advantageously, in the case of the addition of enzyme into the solution, the predetermined duration is between 2 and 6 hours.

Preferably, the enzyme is urease.

Advantageously, the conversion level is between 50 and 99 %, preferably between 75 and 97 %, in particular between 85 and 95 %.

Indeed, as explained above, it has been observed that a conversion of 90% of the ammonia precursor may allow a reduction of the duration of conversion by 50 % in comparison with a total conversion.

Preferably, the precursor is urea, the solution being preferably an aqueous eutectic solution comprising urea.

Indeed, the urea is stable in time and easy to manipulate. Furthermore, a solution of urea may be transported, stored and used without danger.

According to the invention, a method is also provided for a selective catalytic reduction, wherein automated means add to exhaust gas a solution comprising an ammonia precursor and ammonia when a temperature of the exhaust gas is less than or equal to 180°C, preferably less than or equal to 150 °C, in particular less than or equal to 130 °C.

The use of ammonia as a reductant in a selective catalytic reduction converts nitrogen oxides of the exhaust gas into diatomic nitrogen and water and thus diminishes the emission of nitrogen oxides into atmosphere.

Thus, the solution injected to the exhaust gas for the reduction may result from a partial conversion into ammonia. A partially converted solution has a similar efficiency concerning the reduction of nitrogen oxides, while creating less solid deposits when injected into exhaust gas at low temperature, than a urea solution. Thus, the temperature of the exhaust gas may be lower than a temperature related to a reduction with a complete converted solution, as the amount of solid deposits at low temperature is lower with a partially converted solution, as observed by the inventors. In comparison, the injection of the converted solution is possible at low temperature (120°C), as the deposit formation is lower. However, the SCR reaction at low temperature is only possible in that case if a catalyst is active at such temperature.

Furthermore, it has been observed that this solution has a lower melting point, allowing the use of it at lower temperature conditions than a totally converted solution. Corollary, the use of such a solution limits the time needed to convert the solution, as it is a partial conversion, and limits the time spent to heat the exhaust gas or the solution itself, thus increasing also the lifetime of the system.

Advantageously, beforehand, the solution is obtained thanks to a method of converting a solution comprising an ammonia precursor as described above.

Preferably, any method described above is implemented in a vehicle.

According to the invention, it is also provided the use of a solution comprising an ammonia precursor and ammonia as a vehicle fuel source, preferably as a hydrogen source for fuel cells.

This solution is preferably obtained according to the method of the invention and is thus partially converted.

According to the invention, a device is also provided for converting a solution comprising an ammonia precursor, the device being arranged for stopping a partial conversion of the ammonia precursor of the solution into ammonia when a predetermined conversion level is reached.

The technical effects provided by this device have been explained above in reference with the method of converting a solution comprising an ammonia precursor.

We will now present two embodiments of the invention provided as nonlimiting examples and with reference to the appended figures in which :
- figure 1 illustrates a first embodiment of the invention;
- figure 2 is a graph relative to an advantage of the embodiment of figure 1; and
- figure 3 illustrates a second embodiment of the invention.

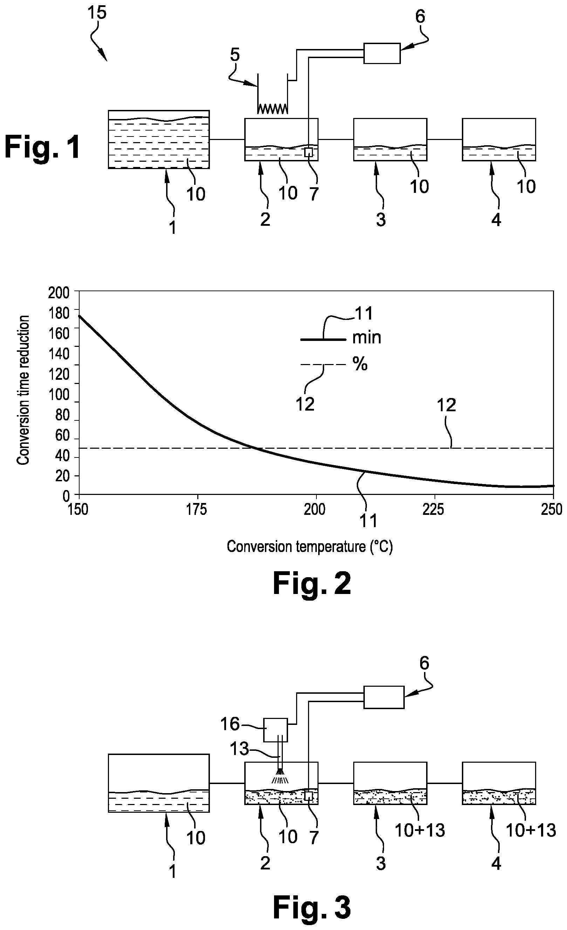

Figure 1 illustrates an embodiment of a system 15 of conversion of urea based on the partial conversion of a urea solution 10. The urea solution 10 is here the standardized Adblue® fluid used in the selective catalytic reduction technology for the removal of nitrogen oxides from the exhaust gas of a vehicle, and consisting in a 32.5 ± 0.7 weight % urea solution in water, stored in the tank 1. Part of the urea solution 10 is transferred, for example by pumping, into the decomposition unit 2, where the urea is partially decomposed, that is to say converted. Decomposition, or conversion, is here carried out by a thermal treatment of the solution 10, with a temperature of conversion situated in the range between 150°C and 400°C. The higher the temperature, the shorter the conversion time. For other types of solution comprising an ammonia precursor, this range of temperature of conversion may be different. The necessary heat for the decomposition is provided via the heater 5. After decomposition, the content 10 of the unit 2 is transferred to the buffer 3, before being used in the device 4 as reductant for a selective catalytic reduction in the exhaust pipe of a thermal engine of a vehicle. A further treatment may occur at the level of the buffer 3, with water elimination or CO₂ elimination for example.

Selective catalytic reduction is known by a skilled person and will not be described in details. Such a reduction allows ammonia to transform nitrogen oxides in the exhaust line into water and dinitrogen and thus allows the vehicle to emit less pollutant gas into the atmosphere.

Now we are going to describe how to monitor the conversion of the urea solution 10 into ammonia. The particularity of the invention is that the conversion is voluntary stopped before completion. In other terms, the urea solution 10 is not fully converted into ammonia, it is a partial conversion. To do that, kinetics data of the hydrolysis of urea solution 10 are beforehand determined by calculation and/or test, in order to know the extent and progress of the conversion reaction and at which conditions evolve the conversion. The goal is to determine these conditions for a given level of conversion, in order to be able to reach such a level when a conversion is needed. In this embodiment, these conditions are the temperature of conversion and the duration of heating. Thus, a table is determined during test or by calculation and is implemented in the electronic control unit (ECU) 6. For example, it is known by the ECU 6, thanks to these prior tests, that to reach a level of X% of conversion, it is necessary to heat the solution at the temperature of Y °C during Z minutes.

The electronic control unit (ECU) 6 is integrated to the system of the vehicle in order to be able to control the decomposition reaction level, so that the reaction can be stopped before completion. A predetermined level of conversion is selected by a user or chosen automatically depending on conditions such as the temperature or the moment of the lifecycle of the vehicle: the moment at which the selective catalytic reduction is realized is not part of the invention and is known by a skilled person. A conversion level sensor 7 is implemented, in order to follow the reaction progress. In this embodiment, this sensor 7 is a temperature sensor. The beginning of the urea decomposition reaction is set as the required decomposition temperature is reached inside the unit 2 and detected by the sensor 7. As kinetics data are implemented in the ECU 6, the conversion time which is required to get the desired conversion level is determined, and the heater 5 is powered until the time for partial conversion elapses, and is stopped thereafter. To this effect, a timer may be implemented and connected to the ECU 6. In this manner, the predetermined level of conversion is reached.

Alternatively, instead of a temperature sensor, other types of sensor may be used, such as a quality sensor, or a state sensor able to detect the compounds and concentrations in the solution 10 at any moment. In that case, the sensor 7 may directly detect the level of conversion without the help of a temperature sensor and a timer. Electrical conductivity sensor could also be used to assess the level of conversion and the end of heating time.

The decomposition level, or level of conversion, of urea is limited in the 50 % - 99% range, preferably in the 75% - 97 % range, and more preferably in the 85% - 95% range.

A solution of ammonia precursor partially converted into ammonia is as efficient as a totally converted solution to perform a selective catalytic reduction. But there are also other advantages.

The benefits of a partial conversion comprise the saving of time, as illustrated in figure 2. That figure illustrates the reduction of the time of conversion depending on the conversion temperature, when, instead of converting 99% of the urea in ammonia, the conversion is stopped when the conversion level reaches 90%. The continuous line 11 represents the time saved in minutes, as the dotted line 12 illustrates the same saving in percentage. We may notice that, as the dotted line 12 is horizontal, it is clear that the saving is always the same: 50%. Thus, the reduction of time is of 50% when we go from a conversion of 99% of urea into ammonia to a conversion of 90% of urea into ammonia. In other terms, the almost last 9% of urea not converted allow to save 50% of time of conversion.

The time saving resulting from the limitation of the conversion level shortens the start-up time necessary at the start of the vehicle. By saving time of conversion, the invention also protects the system 15, notably the unit 2 which is subject to high temperatures and high pressures for the conversion. Thus, this invention allows to increase the lifetime of the system 15 and of components necessary to the selective catalytic reduction.

Furthermore, the use of a partially converted solution 10 has other advantages. As shown in the table below, a partially converted solution may be injected in the exhaust gas under a temperature lower than a temperature for a totally or almost totally converted solution. This comparison is between a converted solution and a urea solution (Adblue®).

Indeed, one of the current limitation of the nitrogen oxides depollution SCR technology based on the use of the Adblue® fluid as reductant precursor is due to the occurrence of solid deposits inside the exhaust pipe when the temperature is too low (typically below 180°C - 200°C). This means that nitrogen oxides removal is only effective at least several minutes after vehicle start-up.

The use of a partially converted urea solution is advantageous as the decomposition of the urea solution provides effluents that can be injected at a lower exhaust pipe temperature than in the case of the Adblue® solution, while generating only a limited amount of solid deposits. As an example, the data reported in the table below are relevant to the results of reductant injection in a dummy exhaust line, which was heated at different temperatures:

| Test # | Reductant | Injection flow rate | Temperature | Injection time | Solid deposit |
|---|---|---|---|---|---|
| 1 | Adblue® | 142.5g/h | 180°C | 1 h | 24 g |
| 2 | 80% converted Adblue® | 110 g/h | 140°C | 1 h | 0.7 g (cyanuric acid and urea) |
| 3 | 80% converted Adblue® | 110 g/h | 120°C | 1 h | no (13 g liquid in pipe) |
| 4 | 90% converted Adblue® | 110 g/h | 120°C (30 minutes) + 180°C 60 minutes) | 1 h 30 | no (11 g liquid in pipe) |

According to these results, it is possible to activate the injection function, that is to say to start the selective catalytic reduction, when the temperature of the exhaust gases is as low as 140°C. It is even possible to inject a 80 or 90% converted solution when the temperature of the exhaust gases is as low as 120°C. Indeed, no solid deposits are formed according to the results. As it is shorter and more economical to heat the solution at a low temperature (the injection temperature), the use of this partially converted solution provides advantages compared to a full or almost full converted solution.

Another advantage of the use of a partially converted solution comprising a precursor of ammonia, such as urea, is to move the freezing point. Indeed, The Adblue® solution corresponds to an urea / water eutectic composition, with a freezing point at - 11°C. Accordingly, when the ambient temperature is lower than -11°C, thawing of the Adblue® is necessary before a further injection is possible, meaning a need in energy (heat). Any fluid reductant composition with a lower freezing temperature and/or presenting a delayed solid formation (crystallization) time provides an advantage as the power demand for a low temperature start up is reduced.

Quite unexpectedly, it was observed that the formation of solid particles is delayed when the urea conversion level is limited. For example, at - 20°C, the phase composition of the effluents made of a 100% converted Adblue® solution consists in 88 weight % solid and 12 weight % liquid after three hours of conditioning, without any further significant evolution. In the case of a 90% converted urea solution, no solid formation is observed when the effluents are conditioned at - 20°C for 8 hours. The solid fraction after 10 days at -20°C is lower than 10 weight %. Thus, it appears that the use of a partially converted solution provides a liquid fraction even below the freezing point of the usual urea solution. Here again, it allows to save time of heating, power of heating and thus increase the lifetime of the system 15.

After the description of a first embodiment and the advantages of the invention, we now are going to describe a second embodiment, in reference with figure 3.

In this embodiment, the only difference compared to the first embodiment is the replacement of heater 5 by a unit 16 for providing an enzyme 13. Indeed, in this embodiment, it is not necessary to heat the solution 10 to a temperature beyond 60 °C, because this embodiment implements an enzymatic hydrolysis. In other terms, the conversion takes place by means of an addition of an enzyme 13 into the solution 10. Of course, a heater 5, not shown in figure 3, may still be used for heating to a temperature range from 40 to 60°C the solution 10 comprising the enzyme 13.

Here again, as in the first embodiment, kinetics data are determined by calculation and/or test, in order to know at which conditions the conversion evolves. Unlike the first embodiment, kinetics data involve here the amount of enzyme 13, in addition to the temperature of conversion and to the duration of heating. Thus, it is beforehand determined to which conditions of temperature, duration of heating and amount of enzyme 13 a given partial level of conversion may be reached, and all data are implemented in the ECU 6, as in the first embodiment.

Thus, with enzymatic hydrolysis, the ECU 6 may work like in the first embodiment, that is to say, with a given amount of enzyme 13, by only controlling the temperature of reaction and the time of reaction, so that it can be stopped before completion of conversion of the urea solution 10. Alternatively, the decomposition can be only controlled by the amount of enzyme 13 added to the urea solution 10, with a given temperature and duration of heating. As an example, the data reported in the tables below show results of conversion levels controlled by temperature (a), reaction time (b) and enzyme amount (c).

a: conversion level controlled by temperature

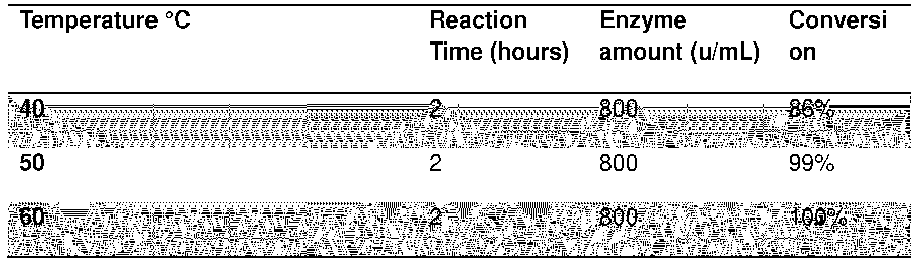

Here, the level of conversion of the urea solution 10 only depends on the temperature of heating. The urea solution is heated respectively at 40, 50, and 60 °C during two hours, with the addition of 800 u/mL of enzyme, to reach respectively 86, 99 or 100% of conversion level.

b: conversion level controlled by reaction time

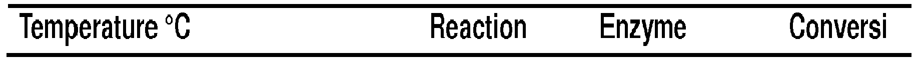

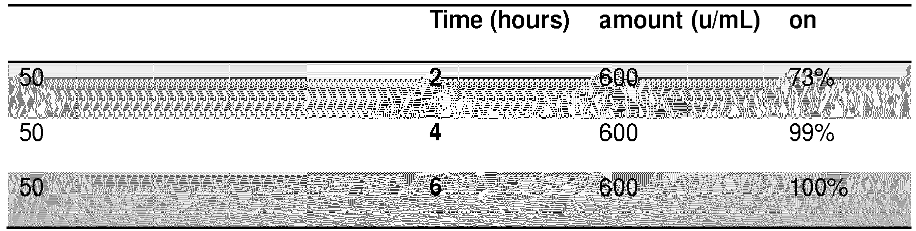

Here the conversion level only depends on the duration of heating.

c: conversion level controlled by enzyme amount

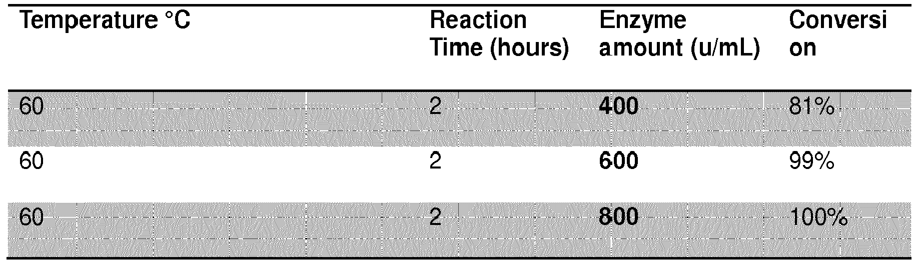

Here the conversion level only depends on the amount of enzyme, with heating and duration of heating being fixed.

Thus, it is possible for the ECU 6 to influence only one factor (temperature, duration of heating or amount of enzyme) or to change several of these factors, to reach a predetermined level of conversion.

The invention is not limited to the embodiments presented and other embodiments will become apparent to those skilled in the art. It is especially possible to use such a partially converted solution as a hydrogen source for fuel cells.

## Claims

1. A method of converting a solution (10) comprising an ammonia precursor, wherein automated means (6) stop a partial conversion of the ammonia precursor of the solution (10) into ammonia when a predetermined conversion level is reached.

2. A method according to the preceding claim, wherein the conversion level is predetermined at least with reference to a predetermined temperature of conversion and to a predetermined duration of conversion.

3. A method according to the preceding claim, wherein the predetermined temperature is between 150 and 400°C, preferably between 180 and 250 °C.

4. A method according to any one of the preceding claims, wherein the conversion level is predetermined at least with reference to a predetermined amount of an enzyme (13) to be added to the solution (10) for the partial conversion.

5. A method according to the preceding claim, wherein the automated means (6) stop an addition of the enzyme (13) to the solution (10) when the predetermined amount of the enzyme has been added to the solution.

6. A method according to claim 2 and to any one of claims 4 to 5, wherein the predetermined temperature is between 30 and 60°C.

7. A method according to claim 2 and to any one of claims 4 to 6, wherein the predetermined duration is between 2 and 6 hours.

8. A method according to any one of claims 4 to 7, wherein the enzyme (13) is urease.

9. A method according to any one of the preceding claims, wherein the conversion level is between 50 and 99 %, preferably between 75 and 97 %, in particular between 85 and 95 %.

10. A method according to any one of the preceding claims, wherein the precursor is urea, the solution (10) being preferably an eutectic solution comprising urea.

11. A method for a selective catalytic reduction, wherein automated means (6) add to exhaust gas a solution (10) comprising an ammonia precursor and ammonia when a temperature of the exhaust gas is less than or equal to 180°C, preferably less than or equal to 150 °C, in particular less than or equal to 130 °C.

12. A method according to the preceding claim, wherein, beforehand, the solution (10) is obtained thanks to a method according to any one of claims 1 to 10.

13. A method according to any one of the preceding claims, implemented in a vehicle.

14. The use of a solution (10) comprising an ammonia precursor and ammonia, as a vehicle fuel source, preferably as a hydrogen source for fuel cells.

15. A device (1, 2, 5, 6) for converting a solution (10) comprising an ammonia precursor, the device being arranged for stopping a partial conversion of the ammonia precursor of the solution into ammonia when a predetermined conversion level of the conversion is reached.
